# EUROPÄISCHE PATENTANMELDUNG

(11) **EP 0 628 379 A1**
(43) Veröffentlichungstag der Anmeldung: **14.12.1994**
(21) Anmeldenummer: 94108775.1
(22) Anmeldetag: 08.06.1994
(51) Int. Cl.: B23P 15/40, B26D 1/00, C23C 14/32, B26B 9/00

(54) **Verfahren zur Herstellung von selbstschärfenden Messerschneiden sowie selbstschärfende Messerschneide**

(30) Priorität: 11.06.1993 DE 4319427
(71) Anmelder: Schäfer, Helmut, D-72070 Tübingen (DE)
(72) Erfinder: Schäfer, Helmut, D-72070 Tübingen (DE)
(74) Vertreter: Grosse, Rainer, Dipl.-Ing.

(57) **Zusammenfassung**

Die Erfindung betrifft ein Verfahren zur Herstellung von selbstschärfenden Messerschneiden. Es ist vorgesehen, daß die Messerschneide (1) einseitig mit einer dünnen Hartstoffschicht, insbesondere Hartmetallschicht (2), versehen ist.

## Beschreibung

Die Erfindung betrifft ein Verfahren zur Herstellung von selbstschärfenden Messerschneiden.

Verfahren zur Herstellung von Messern, insbesondere für Brotschneidemaschinen, sind bekannt. Die dort verwendeten, gatterartig angeordneten Messer dienen dazu, Brot in Scheiben zu schneiden. Es hat sich gezeigt, daß die Standzeit der Messer der bekannten Maschinen nicht ausreicht; sie werden im Laufe der Zeit durch Abnutzung stumpf.

Der Erfindung liegt die Aufgabe zugrunde, ein Verfahren anzugeben, bei der die Standzeit der Messer vergrößert wird.

Diese Aufgabe wird erfindungsgemäß dadurch gelöst, daß die keilförmige Schneide 1 einseitig mit einer dünnen Hartmetallschicht 2 versehen ist. Hierdurch wird erreicht, daß die unbeschichtete Seite 3 der Schneide 1 sich wesentlich schneller abnutzt als die mit Hartmetall beschichtete Seite 4 der Schneide 1. Dies führt zu einem Selbstschärfeffekt.

Vorteilhafte Weiterbildungen der Erfindung sind in den Unteransprüchen gekennzeichnet.

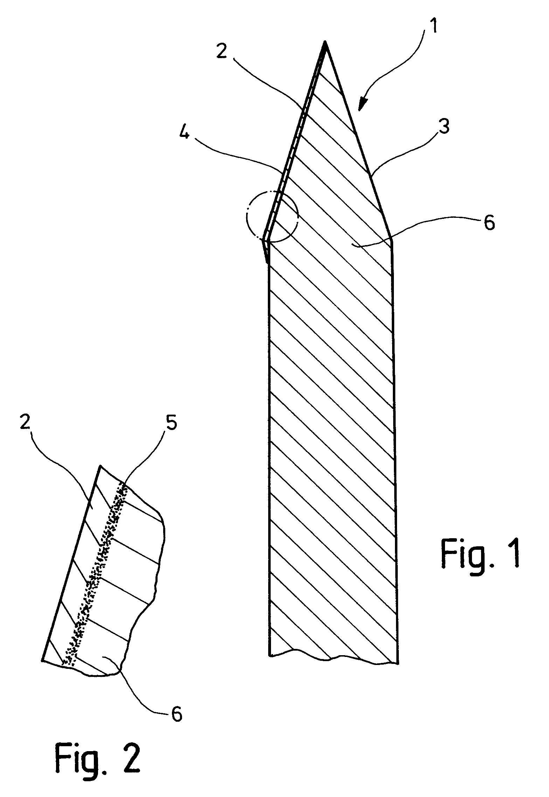

Die Figur 1 zeigt die erfindungsgemäße Messerschneide; Figur 2 zeigt ein vergrößertes Schnittbild im Bereich der beschichteten Seite der Messerschneide.

Die Hartmetallschicht 2, mit einer Schichtdicke im µ-Bereich, wird nur kaum meßbar abgetragen und bildet mit ihrer Schichtdicke die vordere Schneidkante. Auch die Grenzschicht 5 kann bevorzugt als Mischgefüge die vordere Schneidkante mitausbilden.

Bei Standzeitversuchen an einer Gatter-Brotschneidmaschine mit 44 parallel angeordneten Messern wurden je 22 handelsübliche Messer und 22 beschichtete Messer nach Anspruch 1 eingebaut. Die handelsüblichen Messer mußten nach 10.000 geschnittenen Broten ausgetauscht werden. Die nach Anspruch 1 beschichteten Messer wiesen nach 30.000 Durchläufen immer noch eine scharfe Schneide 1 auf.

Vorzugsweise erfolgt die Beschichtung der Schneide im Funkenerosionsverfahren. Bevorzugt wird für die Beschichtung Wolframnitrit verwendet. Die Schichtdicke beträgt 3 bis 4 µ.

Mithin ist erfindungsgemäß die selbstschärfende Messerschneide mit einer einseitig aufgeschweißten Hartmetallschicht 2 versehen, die eine Schichtdicke im µ-Bereich aufweist. Besonders vorteilhaft ist es, daß die Schneide 1 nur einseitig beschichtet ist, das heißt, nur dort wird die Hartstoffschicht, insbesondere Hartmetallschicht 2, aufgebracht, wobei die andere Seite 3 der Schneide 1 nicht beschichtet wird. Die Hartstoffschicht, insbesondere Hartmetallschicht 2, wird -wie bereits erwähnt- im Funkenerosionsverfahren auf eine Seite 4 der keilförmig ausgebildeten Schneide 1 aufgetragen, wobei bei diesem Auftragen in der Grenzschicht 5 zwischen dem Grundmaterial 6 der Schneide 1 und der Beschichtung eine Gefügevermengung zwischen Hartstoff, insbesondere Hartmetall, und Trägerwerkstoff hergestellt wird.

Beim maschinellen Einsatz von Messern, wie zum Beispiel in der Lebensmittelherstellung und Verarbeitung mit weichem bis mittelhartem Schneidgut, werden herkömmliche Messer durch allseitige Abnutzung der Schneide sehr schnell stumpf. Bei den erfindungsgemäß präparierten Messerschneiden bewirkt der Abtrag an der Schneidenseite 3, die nicht beschichtet ist, ein kontinuierliches Herauswachsen der Hartstoffschicht, insbesondere Hartmetallschicht 2, aus der Schneidenspitze. Der nicht stabile Überstand kann sich wegen der Härte des Beschichtungsmaterials nicht umlegen und bricht aus. Hierdurch wird eine kontinuierlich scharfe Schneide 1 gewährleistet.

## Patentansprüche

1. Verfahren zur Herstellung von selbstschärfenden Messerschneiden, **dadurch gekennzeichnet**, daß die Messerschneide (1) einseitig mit einer dünnen Hartstoffschicht, insbesondere Hartmetallschicht (2), versehen ist.

2. Verfahren nach Anspruch 1, **dadurch gekennzeichnet**, daß die Messerschneide (1) keilförmig ausgestaltet ist.

3. Verfahren nach einem der vorhergehenden Ansprüche, **dadurch gekennzeichnet**, daß die keilförmige Schneide (1) nur einseitig mit der dünnen Hartmetallschicht (2) beschichtet ist.

4. Verfahren nach einem der vorhergehenden Ansprüche, **dadurch gekennzeichnet**, daß das Auftragen der Hartstoffschicht im Funkenerosionsverfahren erfolgt.

5. Verfahren nach einem der vorhergehenden Ansprüche, **dadurch gekennzeichnet**, daß im Funkenerosionsverfahren die Hartmetallschicht (2) auf eine Seite (4) der keilförmigen Schneide (1) derart aufgetragen wird, daß in der Grenzschicht (5) eine Gefügevermengung zwischen Hartmetall und Trägerwerkstoff hergestellt wird.

6. Verfahren nach einem der vorhergehenden Ansprüche, **dadurch gekennzeichnet**, daß als Hartmetallschicht (2) Wolframnitrit vorzugsweise im Funkenerosionsverfahren aufgetragen wird.

7. Verfahren nach einem der vorhergehenden Ansprüche, **dadurch gekennzeichnet**, daß die Hartstoffschicht mit einer Schichtdicke von 1 bis 30 µ, insbesondere 3 bis 4 µ aufgetragen wird.

8. Verfahren nach einem der vorhergehenden Ansprüche, **dadurch gekennzeichnet**, daß durch die Beschichtung im Funkenerosionsverfahren eine Hartmetallschicht (2) auf den Trägerwerkstoff des Messers aufgebracht wird.

9. Verfahren nach einem der vorhergehenden Ansprüche, **dadurch gekennzeichnet**, daß beim Funkenerosionsverfahren durch Verändern der Stromstärke, der Schwingungszahl der Auftragselektrode und/oder der Elektrodenstärke die Dicke der aufgebrachten Schicht bestimmt wird.

10. Verfahren nach einem der vorhergehenden Ansprüche, **dadurch gekennzeichnet**, daß die Oberflächenstruktur der aufgebrachten Schicht durch die Schwingungszahl der Funkenerosionseinrichtung festgelegt wird.

11. Verfahren nach einem der vorhergehenden Ansprüche, **dadurch gekennzeichnet**, daß die Parameter bei dem Aufbringen der Schicht im Funkenerosionsverfahren derart aufeinander abgestimmt werden, daß eine fertige Schneide (1) entsteht, ohne daß diese nachgeschliffen werden muß und/oder das Beschädigungen auftreten.

12. Verfahren nach einem der vorhergehenden Ansprüche, **dadurch gekennzeichnet**, daß die Beschichtung auf eine fertig geschliffene Schneide (4) des Trägerwerkstoffs einseitig aufgebracht wird.

13. Selbstschneidende Messerschneide, insbesondere hergestellt nach einem oder mehreren der vorhergehenden Ansprüche, **dadurch gekennzeichnet**, daß durch Funkenerosionsverfahren eine Hartstoffschicht, insbesondere Hartmetallschicht (2), nur auf eine Seite (4) der keilförmigen Schneide (1) aufgetragen wird.

14. Selbstschneidende Messerschneide nach Anspruch 13, **dadurch gekennzeichnet**, daß in einer Grenzschicht (5) eine Gefügevermengung zwischen Hartmetall und Trägerwerkstoff vorliegt.

15. Selbstschneidende Messerschneide, **dadurch gekennzeichnet**, daß die einseitig aufgebrachte Hartmetallschicht (2) eine Schichtdicke von 1 bis 30 µ, insbesondere 3 bis 4 µ aufweist.
